# FASCICULE DE BREVET EUROPEEN

(11) **EP 3 008 112 B1**
(45) Date de publication et mention de la délivrance du brevet: **01.02.2017**
(21) Numéro de dépôt: 14733278.7
(22) Date de dépôt: 06.06.2014
(51) Int. Cl.: C08G 81/02, C08L 23/08, C08L 23/12, C08L 77/00, B32B 27/06

(54) **COMPOSITION THERMOPLASTIQUE NANOSTRUCTUREE DE TYPE POYOLEFINE GREFFEE POLYAMIDE**
NANOSTRUKTURIERTE THERMOPLASTISCHE POLYAMIDGEPFROPFTE POLYOLEFINZUSAMMENSETZUNG
POLYAMIDE-GRAFTED POLYOLEFIN NANOSTRUCTURED THERMOPLASTIC COMPOSITION

(30) Priorité: 11.06.2013 FR 1355386
(43) Date de publication de la demande: 20.04.2016
(73) Titulaire: Arkema France, 92700 Colombes (FR)
(72) Inventeur: SABARD, Mathieu, 27470 Serquigny (FR); BIZET, Stéphane, F-27170 Barc (FR); FLAT, Jean-Jacques, F-27170 Goupillieres (FR); AUSSEDAT, Grégoire, 75009 Paris (FR)
(74) Mandataire: Gavin, Pablo
(86) Numéro de dépôt international: PCT/FR2014/051357
(87) Numéro de publication internationale: WO 2014/199054

(56) Documents cités:
- FR-A1- 2 912 150

## Description

### Domaine de l'invention

L'invention a pour objet une composition thermoplastique nanostructurée comprenant de préférence un mélange d'au moins un terpolymère à base d'éthylène et d'un copolymère élastomère également à base d'éthylène, ce terpolymère et ce copolymère élastomère présentant chacun une quantité non négligeable d'un greffon de type particulier ainsi qu'un composant particulier choisi parmi certains polyamides, polyéthylènes ou polypropylènes, ou un mélange de ces derniers.

L'invention se rapporte également à une structure multicouche dans laquelle au moins une des couches est constituée par la composition selon l'invention.

### Etat de l'art

Il est décrit dans le document WO 02/28959 un copolymère greffé à blocs polyamides sur un tronc en polyoléfine qui est choisi parmi les copolymères éthylène/anhydride maléique et éthylène/(méth)acrylate d'alkyle/anhydride maléique, formant un alliage co-continu nanostructuré. Cela confère à ce copolymère, entre autre, une résistance au choc à basse température exceptionnelle, qui sont maintenues en redispersant ce copolymère greffé dans des polyoléfines souples telles que les polymères souples de l'éthylène.

De tels mélanges trouvent des applications comme adhésifs, films, bâches, produits calandrés, câbles électriques ou poudres pour des procédés de moulage d'objets ("slush molding"). Dans le document WO 2006/085007, une telle composition était utilisée pour constituer une couche de protection thermique d'un substrat subissant des températures supérieures à 150°Celsius (°C).

Ces matériaux, dits nanostructurés, tels que définis dans les deux documents brevet susmentionnés, sont très flexibles (module de flexion < 200 MPa).

Dans certains cas très particuliers, on a ajouté aux compositions thermoplastiques des polyamides mais la tenue au choc de ce mélange de copolymères greffés avec de tels polyamides s'avère insuffisante, en particulier lorsque les températures sont basses : la résilience à -20°Celsius est de l'ordre de 15 kJ/m² (Kilo Joule par mètre carré), ce qui les rend inapproprié pour certaines applications telles que par exemple les applications dans le sport à basses températures (chaussures de ski par exemple).

Par ailleurs, quelque soit l'ajout que l'on pourrait envisager à ces composés, il est impératif que la composition conserve un module de flexion suffisamment important (> 400 MPa idéalement) et un niveau de viscosité faible.

Or, l'homme du métier sait que pour des compositions thermoplastiques, l'amélioration de la tenue au choc se fait immanquablement au détriment du module de flexion, voire de la viscosité.

### Brève description de l'invention

Il a été constaté par la demanderesse, après diverses expériences et manipulations, que, contrairement aux enseignements bien connues de l'homme du métier, une composition nanostructurée co-continue comportant des quantités déterminées d'un polymère particulier, d'un premier copolymère et d'un second copolymère élastomère, ces deux derniers composants étant greffés par un polyamide dans une certaine gamme de pourcentage massique de la composition présente une tenue au choc améliorée de façon très importante, tout en conservant un module de flexion stable, c'est-à-dire sans détérioration.

Ainsi, la présente invention concerne une composition thermoplastique comprenant :
- un premier copolymère greffé par des greffons polyamide consistant en un tronc en polyoléfine contenant un reste d'au moins un monomère insaturé (X) et une pluralité de greffons en polyamide, les greffons en polyamide sont attachés au tronc en polyoléfine par le reste du monomère insaturé (X) comprenant une fonction capable de réagir par une réaction de condensation avec un polyamide ayant au moins une extrémité amine et/ou au moins une extrémité acide carboxylique, le reste du monomère insaturé (X) est fixé sur le tronc par greffage ou copolymérisation ;
caractérisée en ce qu'elle comprend :
- un second copolymère consistant en un copolymère élastomère greffé par des greffons polyamide constitué d'un tronc en polyoléfine choisi parmi un copolymère d'éthylène - propylène maléisé, un copolymère éthylène - butène maléisé, un copolymère éthylène - hexène maléisé, un copolymère éthylène - octène maléisé, un copolymère éthylène - méthylacrylate maléisé, un copolymère ethylène-propylène-diène et d'une pluralité de greffons en polyamide ;
- un troisième composant consistant en un polyamide, un polyéthylène ou un polypropylène, ou un mélange de ces derniers ;
   et en ce que les rapports massiques suivants sont vérifiés :
   - entre 10% et 30% en masse de la composition pour le tronc en polyoléfine du susdit premier copolymère,
   - entre 10% et 30% en masse de la composition pour le tronc en polyoléfine du susdit second copolymère,
   - entre 5% et 35% en masse de la composition en greffons polyamide, fixés sur le premier et le second copolymère,

- entre 30% et 60% en masse du susdit troisième composant.

D'autres caractéristiques avantageuses de l'invention sont précisées dans la suite :
De préférence, le monomère insaturé (X) est l'anhydride maléique.

Avantageusement, le premier copolymère est un terpolymère éthylène/(méth)acrylate d'alkyle/anhydride maléique.

Selon un aspect particulier de l'invention, le susdit polymère greffé est avantageusement nanostructuré.

Selon un aspect de l'invention, la masse molaire en nombre des susdits greffons polyamide du susdit polymère greffé est comprise dans la gamme allant de 1000 à 10000 g/mole, de préférence comprise entre 1000 et 5000 g/mole.

De préférence, les greffons en polyamide consistent en des greffons polyamide PA6 monofonctionnel NH2.

Avantageusement, le polyamide du troisième composant consiste en un polyamide 6, un polyamide 11, polyamide 12, polyamide 6.6, polyamide 6.9, polyamide 6.10, polyamide 6.12, polyamide 10.12, polyamide 10.10, polyamide 12.12, polyamide semi-aromatique, notamment le MXD6, les polyphtalamides obtenus à partir d'acide téréphtalique et/ou isophtalique, et leurs copolyamides.

Selon un aspect avantageux de l'invention, le susdit premier copolymère et le susdit second copolymère représentent un maximum de 50% en masse de la composition.

Avantageusement, l'adjuvant fonctionnel consiste en un plastifiant, un promoteur d'adhésion, un stabilisant UV et/ou un absorbeur UV, un antioxydant, un retardateur de flamme et/ou un colorant/azurant.

Selon une possibilité offerte par l'invention, la composition consiste uniquement en le premier et le second des susdits copolymères greffés ainsi que le susdit troisième composant.

L'invention concerne également une structure multicouche comportant une pluralité de couches adjacentes, caractérisé en ce qu'au moins une de ces couches consiste en la composition telle que définie précédemment.

Il doit être noté que la composition selon l'invention est présentée en lien avec des applications dans le sport (en raison de la nécessaire tenue au choc, en particulier à basses températures) mais bien entendu cette composition pourra être envisagée pour toutes autres applications où une telle composition est avantageusement utilisable, notamment dans les structures multicouches telles que par exemple les skis, les films ou revêtements adhésifs, ou les tubes de transport d'air, de fluides.

### Description détaillée de l'invention

S'agissant du tronc polyoléfine du premier polymère greffé, c'est un polymère comprenant comme monomère une α-oléfine.

On préfère les α-oléfines ayant de 2 à 30 atomes de carbone.

A titre d'α-oléfine, on peut citer l'éthylène, le propylène, 1-butène, 1-pentène, 3-méthyl-1-butène, 1-hexène, 4-méthyl-1-pentène, 3-méthyl-1-pentène, 1-octène, 1-décène, 1-dodécène, 1-tétradécène, 1-hexadécène, 1-octadécène, 1-eicocène, 1-dococène, 1-tétracocène, 1-hexacocène, 1-octacocène, et 1-triacontène.

On peut également citer les cyclo-oléfines ayant de 3 à 30 atomes de carbone, préférentiellement de 3 à 20 atomes de carbone, tels que le cyclopentane, le cycloheptène, le norbornène, le 5-méthyl-2-norbomène, le tétracyclododécène, et le 2-méthyl-1,4,5,8-diméthano-1,2,3,4,4a,5,8,8a-octahydronaphthalène ; di et polyoléfines, telles que la butadiène, l'isoprène, le 4-méthyl-1,3-pentadiène, le 1,4-pentadiène, 1,5-hexadiène, 1,3-hexadiène, 1,3-octadiène, 1,4-octadiène, 1,5-octadiène, 1,6-octadiène, l'éthylidènenorbomène, le vinyle norbornène, le dicyclopentadiène, le 7-méthyl-1,6-octadiène, le 4-éthylidiène-8-méthyl-1,7-nonadiène, et le 5,9-diméthyl-1,4,8-décatriène ; les composés vinyliques aromatiques tels que le mono- ou poly alkylstyrènes (comprenant le styrène, o-méthylstyrène, m-méthylstyrène, p-méthylstyrène, o,p-diméthylstyrène, o-éthylstyrène, m-éthylstyrène et p-éthylstyrène), et les dérivés comprenant des groupes fonctionnels tels que le méthoxystyrène, l'éthoxystyrène, l'acide benzoïque vinylique, le benzoate de méthyle vinyle, l'acétate de benzyle vinyle, l'hydroxystyrène, l'o-chlorostyrène, le p-chlorostyrène, le di-vinyle benzène, le 3-phénylpropène, le 4-phénylpropène, le α-méthylstyrène, le vinyle chloride, le 1,2-difluoroéthylène, le 1,2-dichloroéthylène, le tétrafluoroéthylène, et le 3,3,3-trifluoro-1-propène.

Dans le cadre de la présente invention, le terme d'α-oléfine comprend également le styrène. On préfère le propylène et tout spécialement l'éthylène comme α-oléfine.

Cette polyoléfine peut-être un homopolymère lorsqu'une seule α-oléfine est polymérisée dans la chaîne polymère. On peut citer comme exemples le polyéthylène (PE) ou le polypropylène (PP).

Cette polyoléfine peut aussi être un copolymère lorsqu'au moins deux comonomères sont copolymérisés dans la chaîne polymère, l'un des deux comonomères dit le « premier comonomère » étant une α-oléfine et l'autre comonomère, dit « deuxième comonomère », est un monomère capable de polymériser avec le premier monomère.

A titre de deuxième comonomère, on peut citer :
- une des α-oléfines déjà citées, celle-ci étant différente du premier comonomère α-oléfine,
- les diènes tels que par exemple le 1,4-hexadiène, l'éthylidène norbornène, le butadiène
- les esters d'acides carboxyliques insaturés tels que par exemple les acrylates d'alkyle ou les méthacrylates d'alkyle regroupés sous le terme (méth)acrylates d'alkyles. Les chaînes alkyles de ces (méth)acrylates peuvent avoir jusqu'à 30 atomes de carbone. On peut citer comme chaînes alkyles le méthyle, l'éthyle, le propyl, n-butyl, sec-butyl, isobutyl, tert-butyl, pentyl, hexyl, heptyl, octyl, 2-ethylhexyl, nonyl, decyl, undecyl, dodecyl, tridecyl, tetradecyl, pentadecyl, hexadecyl, heptadecyl, octadecyl, nonadecyl, eicosyl, hencosyl, docosyl, tricosyl, tetracosyl, pentacosyl, hexacosyl, heptacosyl, octacosyl, nonacosyl. On préfère les (méth)acrylates de méthyle, éthyle et butyle comme esters d'acide carboxylique insaturés.
- les esters vinyliques d'acide carboxyliques. A titre d'exemples d'esters vinyliques d'acide carboxylique, on peut citer l'acétate de vinyle, le versatate de vinyle, le propionate de vinyle, le butyrate de vinyle, ou le maléate de vinyle. On préfère l'acétate de vinyle comme ester vinylique d'acide carboxylique.

Avantageusement, le tronc en polyoléfine comprend au moins 50 % en moles du premier comonomère ; sa densité peut être avantageusement comprise entre 0,91 et 0,96.

Les troncs polyoléfines préférés sont constitués d'un copolymère éthylène-(méth)acrylate d'alkyle. En utilisant ce tronc polyoléfine, on obtient une excellente tenue au vieillissement à la lumière et à la température.

On ne sortirait pas du cadre de l'invention si différents « deuxièmes comonomères » étaient copolymérisés dans le tronc polyoléfine.

Selon la présente invention, le tronc polyoléfine contient au moins un reste de monomère insaturé (X) pouvant réagir sur une fonction acide et/ou amine du greffon polyamide par une réaction de condensation. Selon la définition de l'invention, le monomère insaturé (X) n'est pas un « deuxième comonomère ».

Comme monomère insaturé (X) compris sur le tronc polyoléfine, on peut citer :
- les époxydes insaturés. Parmi ceux-ci, ce sont par exemple les esters et éthers de glycidyle aliphatiques tels que l'allylglycidyléther, le vinylglycidyléther, le maléate et l'itaconate de glycidyle, l'acrylate et le méthacrylate de glycidyle. Ce sont aussi par exemple les esters et éthers de glycidyle alicycliques tels que le 2-cyclohexène-1-glycidyléther, le cyclohexène-4,5-diglycidylcarboxylate, le cyclohexène-4-glycidyl carboxylate, le 5-norbornène-2-méthyl-2-glycidyl carboxylate et l'endocis-bicyclo(2,2,1)-5-heptène-2,3-diglycidyl dicarboxylate. On préfère utiliser le méthacrylate de glycidyle comme époxyde insaturé.
- les acides carboxyliques insaturés et leurs sels, par exemple l'acide acrylique ou l'acide méthacrylique et les sels de ces mêmes acides.
- les anhydrides d'acide carboxylique. Ils peuvent être choisis par exemple parmi les anhydrides maléique, itaconique, citraconique, allylsuccinique, cyclohex-4-ène-1,2-dicarboxylique, 4-méthylènecyclohex-4-ène-1,2-dicarboxylique, bicyclo(2,2,1)hept-5-ène-2,3-dicarboxylique, et x-méthylbicyclo(2,2,1)hept-5-ène-2,2-dicarboxylique. On préfère utiliser l'anhydride maléique comme anhydride d'acide carboxylique.

Le monomère insaturé (X) est de préférence un anhydride d'acide carboxylique insaturé.

Selon une version avantageuse de l'invention, le nombre préféré de monomère insaturé (X) fixé en moyenne sur le tronc polyoléfine est supérieur ou égal à 1,3 et/ou préférentiellement inférieur ou égal à 20.

Ainsi, si (X) est l'anhydride maléique et la masse molaire en nombre de la polyoléfine est 15 000 g/mol, on a trouvé que ceci correspondait à une proportion d'anhydride d'au moins 0,8 % en masse de l'ensemble du tronc de polyoléfine et d'au plus 6,5%. Ces valeurs associées à la masse des greffons polyamide déterminent la proportion de polyamide et de tronc dans le polymère greffé polyamide.

Le tronc polyoléfine contenant le reste du monomère insaturé (X) est obtenu par polymérisation des monomères (premier comonomère, deuxième comonomère éventuel, et éventuellement monomère insaturé (X)). On peut réaliser cette polymérisation par un procédé radicalaire à haute pression ou un procédé en solution, en réacteur autoclave ou tubulaire, ces procédés et réacteurs étant bien connus de l'homme du métier. Lorsque le monomère insaturé (X) n'est pas copolymérisé dans le tronc polyoléfine, il est greffé sur le tronc polyoléfine. Le greffage est également une opération connue en soi. La composition serait conforme à l'invention si plusieurs monomères fonctionnels (X) différents étaient copolymérisés et/ou greffés sur le tronc polyoléfine.

Selon les types et ratio de monomères, le tronc polyoléfine peut être semi-cristallin ou amorphe. Dans le cas des polyoléfines amorphes, seule la température de transition vitreuse est observée, tandis que dans celui des polyoléfines semi-cristallins une température de transition vitreuse et une température de fusion (qui sera nécessairement supérieure) sont observées. Il suffira à l'homme du métier de sélectionner les ratios de monomère et les masses moléculaires du tronc polyoléfine pour pouvoir obtenir aisément les valeurs voulues de température de transition vitreuse, éventuellement de température de fusion ainsi que de viscosité du tronc polyoléfine.

De manière préférée, la polyoléfine a un Melt Flow Index (MFI) compris entre 3 et 400 g/10min (190°C, 2,16kg, ASTM D 1238).

Le tronc en polyoléfine du second copolymère greffé est choisi dans une liste restreinte, à savoir parmi un copolymère d'éthylène - propylène maléisé, un copolymère éthylène - butène maléisé, un copolymère éthylène - hexène maléisé, un copolymère éthylène - octène maléisé, un copolymère éthylène - méthylacrylate maléisé, un copolymère éthylène-propylène-diène.

S'agissant du premier ou du second polymère greffé susmentionné, on utilisera entre 5% et 35% en masse de greffons polyamide, étant considéré la somme des greffons polyamide pour les deux polymères greffés. Ces greffons polyamide viennent se greffer de façon classique, selon l'une des techniques bien connues de l'homme du métier, soit sur l'anhydride maléique du premier copolymère soit sur le monomère fonctionnel du second copolymère (le monomère autre que l'éthylène).

Les greffons polyamide, qu'ils soient présents sur le premier copolymère ou le second copolymère, peuvent être soit des homopolyamides, soit des copolyamides.

Sont notamment visés par l'expression "greffons polyamides" les homopolyamides aliphatiques qui résultent de la polycondensation :
- d'un lactame,
- ou d'un acide alpha, omega-aminocarboxylique aliphatique,
- ou d'une diamine aliphatique et d'un diacide aliphatique.

A titre d'exemples de lactame, on peut citer le caprolactame, l'oenantholactame et le lauryllactame.

A titre d'exemples d'acide alpha, omega-aminocarboxylique aliphatique, on peut citer l'acide aminocaproïque, l'acide amino-7-heptanoïque, l'acide amino-11-undécanoïque et l'acide amino-12-dodécanoïque.

A titre d'exemples de diamine aliphatique, on peut citer l'hexa-méthylènediamine, la dodécaméthylènediamine et la triméthylhexaméthylène diamine.

A titre d'exemples de diacide aliphatique, on peut citer les acides adipique, azélaïque, subérique, sébacique et dodécanedicarboxylique.

Parmi les homopolyamides aliphatiques, on peut citer, à titre d'exemple et de façon non limitative, les polyamides suivants : le polycaprolactame (PA6) ; le polyundécanamide (PA11, commercialisé par ARKEMA sous la marque Rilsan^{®}) ; le polylauryllactame (PA12, également commercialisé par ARKEMA sous la marque Rilsan^{®}) ; le polybutylène adipamide (PA4.6) ; le polyhexaméthylène adipamide (PA6.6) ; le polyhexaméthylène azélamide (PA6.9) ; le polyhexaméthylène sébaçamide (PA-6.10) ; le polyhexaméthylène dodécanamide (PA6.12) ; le polydécaméthylène dodécanamide (PA10.12) ; le polydécaméthylène sébaçanamide (PA10.10) et le polydodecaméthylène dodécanamide (PA12.12).

Sont également visés par l'expression "polyamides semi-cristallins" les homopolyamides cycloaliphatiques.

On peut notamment citer les homopolyamides cycloaliphatiques qui résultent de la condensation d'une diamine cycloaliphatique et d'un diacide aliphatique.

A titre d'exemple de diamine cycloaliphatique, on peut citer la 4,4'-méthylene-bis(cyclohexylamine), encore dénommée para-bis(aminocyclo-hexyl)méthane ou PACM, la 2,2'-diméthyl-4,4'méthylène-bis(cyclo-hexyl-amine), encore dénommée bis-(3-méthyl-4-aminocyclohexyl)-méthane ou BMACM.

Ainsi, parmi les homopolyamides cycloaliphatiques, on peut citer les polyamides PACM.12, résultant de la condensation du PACM avec le diacide en C12, les BMACM.10 et BMACM.12 résultant de la condensation de la BMACM avec, respectivement, les diacides aliphatiques en C10 et en C 12.

Sont également visés par l'expression "greffons polyamide" les homopolyamides semi-aromatiques qui résultent de la condensation :
- d'une diamine aliphatique et d'un diacide aromatique, tel que l'acide téréphtalique (T) et l'acide isophtalique (I). Les polyamides obtenus sont alors couramment appelés "polyphtalamides" ou PPA ;
- d'une diamine aromatique, telle que la xylylènediamine, et plus particulièrement la métaxylylènediamine (MXD) et d'un diacide aliphatique.

Ainsi, et de manière non limitative, on peut citer les polyamides 6.T, 6.I, MXD.6 ou encore MXD.10.

Les greffons polyamide rentrant enjeu dans la composition selon l'invention sont préférentiellement des copolyamides. Ceux-ci résultent de la polycondensation d'au moins deux des groupes de monomères énoncés ci-dessus pour l'obtention d'homopolyamides. Le terme « monomère » dans la présente description des copolyamides doit être pris au sens d' « unité répétitive ». En effet, le cas où une unité répétitive du PA est constituée de l'association d'un diacide avec une diamine est particulier. On considère que c'est l'association d'une diamine et d'un diacide, c'est-à-dire le couple diamine-diacide (en quantité équimolaire), qui correspond au monomère. Ceci s'explique par le fait qu'individuellement, le diacide ou la diamine n'est qu'une unité structurale, qui ne suffit pas à elle seule à polymériser pour donner un polyamide.

Ainsi, les copolyamides couvrent notamment les produits de condensation :
- d'au moins deux lactames,
- d'au moins deux acides alpha,omega-aminocarboxyliques aliphatiques,
- d'au moins un lactame et d'au moins un acide alpha,omega-aminocarboxylique aliphatique,
- d'au moins deux diamines et d'au moins deux diacides,
- d'au moins un lactame avec au moins une diamine et au moins un diacide,
- d'au moins un acide alpha,omega-aminocarboxylique aliphatique avec au moins une diamine et au moins un diacide,
la(les) diamine(s) et le(s) diacide(s) pouvant être, indépendamment l'un de l'autre, aliphatiques, cycloaliphatiques ou aromatiques.

Selon les types et ratio de monomères, les copolyamides peuvent être semi-cristallins ou amorphes. Dans le cas des copolyamides amorphes, seule la température de transition vitreuse est observée, tandis que dans celui des copolyamides semi-cristallins une température de transition vitreuse et une température de fusion (qui sera nécessairement supérieure) sont observées.

Parmi les copolyamides amorphes que l'on peut utiliser dans le cadre de l'invention, on peut citer par exemple les copolyamides contenant des monomères semi-aromatiques.

Parmi les copolyamides, on pourra également utiliser les copolyamides semi-cristallins et particulièrement ceux de type PA 6/11, PA6/12 et PA6/11/12.

Le degré de polymérisation peut varier dans de larges proportions, selon sa valeur c'est un polyamide ou un oligomère de polyamide.

Avantageusement, les greffons polyamide sont monofonctionnels.

Pour que le greffon polyamide ait une terminaison monoamine, il suffit d'utiliser un limiteur de chaîne de formule : 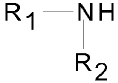 dans laquelle :
- R1 est l'hydrogène ou un groupement alkyle linéaire ou ramifié contenant jusqu'à 20 atomes de carbone,
- R2 est un groupement ayant jusqu'à 20 atomes de carbone alkyle ou alcényle linéaire ou ramifié, un radical cycloaliphatique saturé ou non, un radical aromatique ou une combinaison des précédents. Le limiteur peut être, par exemple, la laurylamine ou l'oleylamine.

Pour que le greffon polyamide ait une terminaison monoacide carboxylique, il suffit d'utiliser un limiteur de chaîne de formule R'₁-COOH, R'₁-CO-O-CO-R'₂ ou un diacide carboxylique.

R'₁ et R'₂ sont des groupements alkyles linéaires ou ramifiés contenant jusqu'à 20 atomes de carbone.

Avantageusement, le greffon polyamide possède une extrémité à fonctionnalité amine. Les limiteurs monofonctionnels de polymérisation préférés sont la laurylamine et l'oléylamine.

Les greffons polyamide ont une masse molaire comprise entre 1000 et 10000 g/mole, de préférence comprise entre 1000 et 5000 g/mole.

La polycondensation peut être utilisée pour procéder au greffage des greffons de polyamide et s'effectue selon les procédés habituellement connus, par exemple à une température comprise en général entre 200 et 300°C, sous vide ou sous atmosphère inerte, avec agitation du mélange réactionnel. La longueur de chaîne moyenne du greffon est déterminée par le rapport molaire initial entre le monomère polycondensable ou le lactame et le limiteur mono fonctionnel de polymérisation. Pour le calcul de la longueur de chaîne moyenne, on compte habituellement une molécule de limiteur de chaîne pour une chaîne de greffon.

Il suffira à l'homme du métier de sélectionner les types et ratio de monomères ainsi que choisir les masses molaires des greffons polyamide pour pouvoir obtenir aisément les valeurs voulues de température de transition vitreuse, éventuellement de température de fusion ainsi que de viscosité du greffon polyamide.

La réaction de condensation du greffon polyamide sur le tronc de polyoléfine (premier ou second copolymère) contenant le reste de X (ou le monomère fonctionnalisé pour le second copolymère greffé, à savoir le copolymère élastomère) s'effectue par réaction d'une fonction amine ou acide du greffon polyamide sur le reste de X. Avantageusement, on utilise des greffons polyamide monoamine et on crée des liaisons amides ou imides en faisant réagir la fonction amine sur la fonction du reste de X.

On réalise cette condensation de préférence à l'état fondu. Pour fabriquer la composition selon l'invention, on peut utiliser les techniques classiques de malaxage et/ou d'extrusion. Les composants de la composition sont ainsi mélangés pour former un compound qui pourra éventuellement être granulé en sortie de filière. Avantageusement, des agents de couplage sont ajoutés lors du compoundage.

Pour obtenir une composition nanostructurée, on peut ainsi mélanger le greffon polyamide et le tronc dans une extrudeuse, à une température généralement comprise entre 200 et 300 °C. Le temps de séjour moyen de la matière fondue dans l'extrudeuse peut être compris entre 5 secondes et 5 minutes, et de préférence entre 20 secondes et 1 minute. Le rendement de cette réaction de condensation est évalué par extraction sélective des greffons de polyamide libres, c'est-à-dire ceux qui n'ont pas réagi pour former le polymère greffé polyamide.

La préparation de greffons polyamide à extrémité amine ainsi que leur addition sur un tronc de polyoléfine contenant le reste de (X) ou d'un monomère fonctionnalisé (second copolymère) est décrite dans les brevets US3976720, US3963799, US5342886 et FR2291225. Le polymère greffé polyamide de la présente invention présente avantageusement une organisation nanostructurée.

La composition selon l'invention comprend également un troisième composant, à savoir un polyamide de haute masse moléculaire choisi parmi le polyamide 6, le polyamide 11, polyamide 12, polyamide 6.6, polyamide 6.9, polyamide 6.10, polyamide 6.12, polyamide 10.12, polyamide 10.10, polyamide 12.12, les polyamides semi-aromatiques, notamment le MXD6, les polyphtalamides obtenus à partir d'acide téréphtalique et/ou isophtalique, et leurs copolyamides, un polyéthylène (VLDPE, LDPE, LLDPE, MDPE, HDPE,...) et/ou un polypropylène (homopolymère ou copolymère). Dans la suite, et en particulier au niveau des exemples de tests réalisés sur la composition, on a toujours utilisé le composant polyamide 6 mais la demanderesse a également réalisé ces mêmes tests, de façon concluante, avec les autres polyamides cités et revendiqués ainsi que pour les polyéthylènes et polypropylènes, seul ou en mélange.

Des plastifiants pourront être ajoutés à la composition selon l'invention afin de faciliter la mise en oeuvre et améliorer la productivité du procédé de fabrication de la composition et des structures. On citera comme exemples les huiles minérales paraffiniques aromatiques ou naphtaléniques qui permettent également d'améliorer le pouvoir d'adhérence de la composition selon l'invention. On peut également citer comme plastifiant les phtalates, azelates, adipates, le phosphate de ticrésyle.

De la même manière, des promoteurs d'adhésion, bien que non nécessaires, peuvent être avantageusement ajoutés afin d'améliorer le pouvoir d'adhérence de la composition lorsque celui-ci doit être particulièrement élevé. Le promoteur d'adhésion est un ingrédient non polymérique ; il peut être organique, cristallin, minéral et plus préférentiellement semi-minéral semi-organique. Parmi ceux-ci, on peut citer les titanates ou les silanes organiques, comme par exemple les monoalkyl titanates, les trichlorosilanes et les trialkoxysilanes, les trialcooxysilane. On pourra également prévoir que ces promoteurs d'adhésion sont directement greffés sur le premier ou le second copolymère par une technique bien connue de l'homme du métier, par exemple via l'extrusion réactive.

Le rayonnement UV étant susceptible d'entraîner un léger jaunissement des compositions thermoplastiques, des stabilisants UV et des absorbeurs UV (ces composés étant dénommés de manière générale des agents anti-UVs) tels que le benzotriazole, le benzophénone et les autres amines encombrés, peuvent être ajoutés dans certaines applications où un tel phénomène doit être évité. Ces composés peuvent être par exemple à base de benzophénone ou de benzotriazole. On peut les ajouter dans des quantités inférieures à 10% en masse de la masse totale de la composition et préférentiellement de 0,1 à 5%.

On pourra également ajouter des anti-oxydants pour limiter le jaunissement lors de la fabrication de la composition tels que les composés phosphorés (phosphonites et/ou phosphites) et les phénoliques encombrés. On peut ajouter ces anti-oxydants dans des quantités inférieures à 10% en masse de la masse totale de la composition et préférentiellement de 0,1 à 5%.

De la même manière, dans certaines applications, des agents retardateurs de flamme peuvent également être ajoutés à la composition selon l'invention. Ces agents peuvent être halogénés ou non-halogénés. Parmi les agents halogénés, on peut citer les produits bromés. On peut également utiliser comme agent non-halogéné les additifs à base de phosphore tels que le polyphosphate d'ammonium, les phosphinates et phosphonates d'aluminium, le cyanurate de mélamine, le pentaérythritol, les zéolithes ainsi que les mélanges de ces agents. La composition peut comprendre ces agents dans des proportions allant de 3 à 40% par rapport à la masse totale de la composition. On pourra également ajouter des composés colorants ou azurants.

On peut également ajouter à la composition des pigments comme par exemple des composés colorants ou azurants dans des proportions allant généralement de 5 à 15% par rapport à la masse totale de la composition.

### Préparation de la composition selon l'invention :

Comme cela a été mentionné précédemment, la technique de greffage des greffons polyamide sur le tronc polyoléfine pour obtenir la polyoléfine greffé polyamide selon l'invention est bien connu de l'homme du métier, et notamment des documents cités précédemment FR 2912150, FR 2918150 ou EP 21966489.

On ne sort donc pas du cadre de l'invention si des agents réticulant sont ajoutés. On peut citer comme exemples des isocyanates ou des peroxydes organiques. Cette réticulation peut également être réalisée par des techniques connues d'irradiation. Cette réticulation peut être effectuée par l'une des nombreuses méthodes connues de l'homme du métier, notamment par l'utilisation d'initiateurs activés thermiquement, par exemple des composés peroxydes et azo, des photoinitiateurs tels que le benzophénone, par des techniques de radiation comportant des rayons lumineux, des rayons UV, des faisceaux d'électrons et des rayons X, de silanes porteurs de fonctions réactives comme un amino silane, un époxy silane, un vinyle silane tel que par exemple le vinyle silane tri-éthoxy ou tri-méthoxy, et de la réticulation par voie humide. Le manuel intitulé « Handbook of polymer foams and technology » supra, aux pages 198 à 204, fournit des enseignements complémentaires auxquels l'homme du métier peut se référer.

### Matériaux employés pour former les formulations testées :

**Lotader^{®} 5500:** terpolymère d'éthylène, d'acrylate d'éthyle (15,5 % en poids) et d'anhydride maléique (2,8 % en poids) produit par ARKEMA possédant un MFI (190°C sous 2,16 kg mesuré selon ISO 1133) de 20g/10mn ;
**Lotader^{®} 4210:** terpolymère d'éthylène, d'acrylate d'éthyle (6.5 % en poids) et d'anhydride maléique (3.6 % en poids) produit par ARKEMA possédant un MFI (190°C sous 2,16 kg mesuré selon ISO 1133) de 9g/10mn ;
**EPR (« *Ethylene Propylene Rubber»)* Exxelor VA 1803 maléisé :** commercialisé par la société Exxon.
**Prépolymère Polyamide :** prépolymère polyamide 6 mono NH2 de Mn 2500 g/mole, produit par la demanderesse. Ce prépolymère a été synthétisé par polycondensation à partir du lactame 6. La laurylamine est utilisée comme limitateur de chaîne de façon à avoir une seule fonctionnalité amine primaire en bout de chaîne. La masse molaire moyenne en nombre du prépolymère est de 2500 g/mol.
**Polyamide 6 haute masse moléculaire,** de Mn = 15000 g/mol commercialisé par la société Domo Chemicals sous la référence Domamid 24 présentant une viscosité relative en solution de 2.45 selon la norme ISO 307.
**Apolhya^{®}** : La famille Apolhya est une famille de polymères commercialisée par ARKEMA qui allient les propriétés des polyamides à celles des polyoléfines grâce à l'obtention de morphologies co-continues à l'échelle manométrique. Il s'agit d'un alliage composé de Lotader^{®} et de prépolymère polyamide 6 mono NH₂, par exemple du Lotader^{®} 5500 et du prépolymère PA6 mono NH2 de masse molaire 2500 g/mole.

### Obtention des formulations testées :

Essentiellement trois types de compositions ont été préparées pour réaliser les tests, à savoir une composition de type Apolhya^{®} ci-après désigné « composition n°1 », des compositions consistant en des mélanges de Lotader^{®}, de prépolymère PA6, de polyamide 6 haute masse moléculaire, ci-après désigné « compositions n°2 à n°5 » et une pluralité de compositions consistant en un mélange d'EPR VA 1803, de Lotader^{®}, de prépolymère PA6, et de polyamide 6 haute masse moléculaire ci-après désigné « compositions n°6 à n°18 ».

| Composition n° | Lotader^{®} (% massique de la composition) | EPR VA 1803 (% massique de la composition) | greffons de polyamide (% massique composition) |
|---|---|---|---|
| 1 (Apolhya) | 75 (Lotader 5500) | - | 25 |
| 2 | 30 (Lotader 5500) | - | 70 (dont 30% prépolymère et 40% haute masse) |
| 3 | 30 (Lotader 4210) | - | 70 (dont 30% prépolymère et 40% haute masse) |
| 4 | 30 (Lotader 5500) | - | 60 (dont 30% prépolymère et 30% haute masse) |
| 5 | 30 (15% Lotader 5500 + 15% Lotader 4210) | - | 70 (dont 30% prépolymère et 40% haute masse) |
| 6 | 5 | 31 | 64 (dont 24% prépolymère et 40% haute masse) |
| 7 | 31 | 5 | 64 (dont 24% prépolymère et 40% haute masse) |
| **8** | **14** | **16** | **70 (dont 30% prépolymère et 40% haute masse)** |
| **9** | **28** | **12** | **60 (dont 30% prépolymère et 30% haute masse)** |
| **10** | **20** | **20** | **60 (dont 10% prépolymère et 50% haute masse)** |
| **11** | **18** | **12** | **60 (dont 15% prépolymère et 45% haute masse)** |
| **12** | **15** | **20** | **65 (dont 5% prépolymère et 60% haute masse)** |
| **13** | **15** | **20** | **65 (dont 35% prépolymère et 30% haute masse)** |
| **14** | **12** | **13** | **75 (dont 35% prépolymère et 40% haute masse)** |
| 15 | 25 | 28 | 47 (dont 20% prépolymère et 27% haute masse) |
| 16 | 25 | 26 | 49 (dont 27% prépolymère et 22% haute masse) |
| 17 | 36 | 16 | 48 (dont 25% prépolymère et 27% haute masse) |
| 18 | 15 | 36 | 48 (dont 25% prépolymère et 27% haute masse) |

La synthèse par le procédé d'extrusion réactive des matériaux de chaque composition a été réalisée sur extrudeuse double vis co-rotative de type Werner de diamètre 40 mm (millimètre), de longueur 40 fois son diamètre avec un profil plat à 260°C, un débit de 70 kg/h (kilogramme par heure) et une vitesse de rotation de 300 rpm (« round per minute » ou « tour par minute »). Les matières sont introduites en alimentation principale.

### Tests réalisés sur les éprouvettes :

Deux types de tests ont été principalement réalisés sur les compositions 1 à 18 afin de tester la résolution éventuellement des problèmes techniques susmentionnés mais il doit être noté que les compositions selon l'invention présentent par ailleurs d'autres propriétés particulièrement intéressantes qui n'ont pas fait ici l'objet de tests.

Ces deux tests consistent d'une part à mesurer le module de flexion à 23°C, exprimé en Méga Pascal (Mpa), et d'autre part à mesurer la résilience à -20°C, exprimée en Kilo Joules par mètre carré (kJ/m²).

### Test du « Module de flexion à 23°C »:

Le module de flexion a été mesuré sur dynamomètre Zwick selon la norme ISO 178. Les mesures ont été menées à 23°C sur échantillons conditionnés pendant 14 jours à 23°C à un taux d'humidité de 50%.

### Test de choc Charpy entaillé à -20°C :

Les essais de choc Charpy ont été réalisés sur pendule Zwick selon ISO 179 eA. Les éprouvettes ont été entaillées de 2mm en V. Les mesures ont été menées à -20°C sur échantillons conditionnés pendant 14 jours à 23°C à un taux d'humidité de 50%.

Pour ces deux tests mécaniques, des éprouvettes ISO 1A et des barreaux 80 x 10 x 4 mm³ ont été réalisées par injection moulage sur presse à injecter de marque KRAUSS MAFFEI. Les paramètres procédés suivants ont été utilisés :
- Température d'injection (alimentation/buse) : 240/260°C
- Température du moule : 40°C
- Temps de maintien : 10 secondes
- Pression de maintien de la matière : 900 bars.
- Temps de refroidissement : 12 secondes

Les résultats pour chaque composition sont reproduits dans le tableau ci-après.

| composition n° | résultats du test du module élastique à 23°C (Mpa) |
|---|---|
| 1 | < 200 |
| 2 | 520 |
| 3 | 690 |
| 4 | 490 |
| 5 | 520 |
| 6 | 330 |
| 7 | 490 |
| **8** | **400** |
| **9** | **460** |
| **10** | **460** |
| **11** | **500** |
| **12** | **620** |
| **13** | **500** |
| **14** | **440** |
| 15 | 220 |
| 16 | 230 |
| 17 | 320 |
| 18 | 240 |

### Test de résilience à -20°C :

Le test de résilience à -20°C consiste en un essai de flexion par choc sur éprouvette entaillée Charpy. Ce test est pratiqué selon la norme internationale ISO 179-1, chaque éprouvette (d'une des compositions susvisées) étant constituée d'un barreau entaillé par usinage en son milieu. La forme d'entaille la plus fréquente est la forme en V d'une profondeur de 2 mm. Les résultats pour chaque composition sont reproduits dans le tableau ci-après.

| composition n° | résultats du test de résilience à -20°C (kJ/m²) |
|---|---|
| 1 | > 50 |
| 2 | 15 |
| 3 | 12 |
| 4 | 14 |
| 5 | 15 |
| 6 | 49 |
| 7 | 15 |
| **8** | **33** |
| **9** | **37** |
| **10** | **84** |
| **11** | **81** |
| **12** | **70** |
| **13** | **84** |
| **14** | **75** |
| 15 | 67 |
| 16 | 66 |
| 17 | 74 |
| 18 | 72 |
| 18 | 85 |

Les résultats pour les deux tests réalisés sur chacune des compositions montrent clairement d'une part les avantages techniques de la composition selon l'invention, bien que ces derniers ne soient en rien prévisibles, et d'autre part les domaines préférés (% massique) pour cette composition. Par facilité de lecture, les compositions selon la présente invention, à savoir les compositions n°8 à n°14, et leurs résultats aux deux tests sont marquées en caractère gras.

On notera que le second copolymère est choisi dans les exemples de composition selon l'invention d'un type unique, à savoir un copolymère éthylène - propylène maléisé, mais il a été démontré que les autres copolymères listés comme possible copolymère (copolymères éthylène - butène maléisé, éthylène - hexène maléisé, éthylène - octène maléisé, éthylène - méthylacrylate maléisé, éthylène-propylène-diène) présenteraient des résultats similaires ou très proches de ceux observés pour les compositions contenant celui présenté dans les exemples.

## Revendications

1. Composition thermoplastique comprenant :
• un premier copolymère greffé par des greffons polyamide consistant en un tronc en polyoléfine contenant un reste d'au moins un monomère insaturé (X) et une pluralité de greffons en polyamide, les greffons en polyamide sont attachés au tronc en polyoléfine par le reste du monomère insaturé (X) comprenant une fonction capable de réagir par une réaction de condensation avec un polyamide ayant au moins une extrémité amine et/ou au moins une extrémité acide carboxylique, le reste du monomère insaturé (X) est fixé sur le tronc par greffage ou copolymérisation ;
**caractérisée en ce qu'**elle comprend :
• un second copolymère consistant en un copolymère élastomère greffé par des greffons polyamide constitué d'un tronc en polyoléfine choisi parmi un copolymère d'éthylène - propylène maléisé, un copolymère éthylène - butène maléisé, un copolymère éthylène - hexène maléisé, un copolymère éthylène - octène maléisé, un copolymère éthylène - méthylacrylate maléisé, un copolymère ethylène-propylène-diène et d'une pluralité de greffons en polyamide ;
• un troisième composant consistant en un polyamide, un polyéthylène ou un polypropylène, ou un mélange de ces derniers ;
et **en ce que** les rapports massiques suivants sont vérifiés :
- entre 10% et 30% en masse de la composition pour le tronc en polyoléfine du susdit premier copolymère,
- entre 10% et 30% en masse de la composition pour le tronc en polyoléfine du susdit second copolymère,
- entre 5% et 35% en masse de la composition en greffons polyamide, fixés sur le premier et le second copolymère,
- entre 30% et 60% en masse du susdit troisième composant.

2. Composition selon la revendication 1, **caractérisée en ce que** le monomère insaturé (X) est l'anhydride maléique.

3. Composition selon la revendication 2, **caractérisée en ce que** le premier copolymère est un terpolymère éthylène/(méth)acrylate d'alkyle/anhydride maléique.

4. Composition selon l'une quelconque des revendications 1 à 3, **caractérisée en ce que** le susdit polymère greffé est nanostructuré.

5. Composition selon l'une quelconque des revendications précédentes, **caractérisée en ce que** la masse molaire en nombre des susdits greffons polyamide du susdit polymère greffé est comprise dans la gamme allant de 1000 à 10000 g/mole, de préférence comprise entre 1000 et 5000 g/mole.

6. Composition selon l'une quelconque des revendications précédentes, **caractérisée en ce que** les greffons en polyamide consistent en des greffons polyamide PA6 monofonctionnel NH2.

7. Composition selon la revendication 6, **caractérisée en ce que** le polyamide du troisième composant consiste en un polyamide 6, un polyamide 11, polyamide 12, polyamide 6.6, polyamide 6.9, polyamide 6.10, polyamide 6.12, polyamide 10.12, polyamide 10.10, polyamide 12.12, polyamide semi-aromatique, notamment le MXD6, les polyphtalamides obtenus à partir d'acide téréphtalique et/ou isophtalique, et leurs copolyamides.

8. Composition selon l'une quelconque des revendications précédentes, **caractérisée en ce que** le susdit premier copolymère et le susdit second copolymère représentent un maximum de 50% en masse de la composition.

9. Composition selon l'une quelconque des revendications précédentes, **caractérisée en ce qu'**elle comprend en outre un plastifiant, un promoteur d'adhésion, un stabilisant UV et/ou un absorbeur UV, un antioxydant, un retardateur de flamme et/ou un colorant/azurant.

10. Composition selon l'une quelconque des revendications 1 à 8, **caractérisée en ce qu'**elle consiste uniquement en le premier et le second des susdits copolymères greffés ainsi que le susdit troisième composant.

11. Structure multicouche comportant une pluralité de couches adjacentes, **caractérisé en ce qu'**au moins une de ces couches consiste en la composition telle que définie à l'une quelconque des revendications précédentes.

## Patentansprüche

1. Thermoplastische Zusammensetzung, umfassend:
• ein erstes Pfropfcopolymer mit Polyamid-Pfropf-anteilen, bestehend aus einer Polyolefin-Hauptkette, die einen Rest mindestens eines ungesättigten Monomers (X) enthält, und mehreren Polyamid-Pfropfanteilen, wobei die Polyamid-Pfropfanteile über den Rest des ungesättigten Monomers (X) mit einer Funktion, die durch eine Kondensationsreaktion mit einem Polyamid mit mindestens einer Aminendgruppe und/oder mindestens einer Carbonsäureendgruppe reagieren kann, an die Polyolefin-Hauptkette gebunden sind, der Rest des ungesättigten Monomers (X) durch Pfropfung oder Copolymerisation an der Hauptkette fixiert ist,
**dadurch gekennzeichnet, dass** sie:
• ein zweites Copolymer, bestehend aus einem elastomeren Pfropfcopolymer mit Polyamid-Pfropfanteilen aus einer Polyolefin-Hauptkette, die aus einem maleinisierten Ethylen-Propylen-Copolymer, einem maleinisierten Ethylen-Buten-Copolymer, einem maleinisierten Ethylen-Hexen-Copolymer, einem maleinisierten Ethylen-Octen-Copolymer, einem maleinisierten Ethylen-Methyl-acrylat-Copolymer, einem Ethylen-Propylen-Dien-Copolymer ausgewählt ist, und mehreren Poly-amid-Pfropfanteilen;
• eine dritte Komponente, bestehend aus einem Polyamid, einem Polyethylen oder einem Polypropylen oder einer Mischung davon;
umfasst und dass die folgenden Gewichtsverhältnisse erfüllt sind:
- zwischen 10 und 30 Gew.-% der Zusammensetzung für die Polyolefin-Hauptkette des obigen ersten Copolymers,
- zwischen 10 und 30 Gew.-% der Zusammensetzung für die Polyolefin-Hauptkette des obigen zweiten Copolymers,
- zwischen 5 und 35 Gew.-% der Zusammensetzung an Polyamid-Pfropfanteilen, die an dem ersten und dem zweiten Polymer fixiert sind,
- zwischen 30 und 60 Gew.-% der obigen dritten Komponente.

2. Zusammensetzung nach Anspruch 1, **dadurch gekennzeichnet, dass** es sich bei dem ungesättigten Monomer (X) um Maleinsäureanhydrid handelt.

3. Zusammensetzung nach Anspruch 2, **dadurch gekennzeichnet, dass** es sich bei dem ersten Copolymer um ein Ethylen/Alkyl(meth)acrylat/Maleinsäureanhydrid-Terpolymer handelt.

4. Zusammensetzung nach einem der Ansprüche 1 bis 3, **dadurch gekennzeichnet, dass** das obige Pfropfpolymer nanostrukturiert ist.

5. Zusammensetzung nach einem der vorhergehenden Ansprüche, **dadurch gekennzeichnet, dass** das zahlenmittlere Molekulargewicht der Polyamid-Pfropfanteile des obigen Pfropfpolymers im Bereich von 1000 bis 10.000 g/mol und vorzugsweise zwischen 1000 und 5000 g/mol liegt.

6. Zusammensetzung nach einem der vorhergehenden Ansprüche, **dadurch gekennzeichnet, dass** die Polyamid-Pfropfanteile aus Pfropfanteilen aus NH₂-monofunktionellem PA6-Polyamid bestehen.

7. Zusammensetzung nach Anspruch 6, **dadurch gekennzeichnet, dass** das Polyamid der dritten Komponente aus einem Polyamid 6, einem Polyamid 11, Polyamid 12, Polyamid 6.6, Polyamid 6.9, Polyamid 6.10, Polyamid 6.12, Polyamid 10.12, Polyamid 10.10, Polyamid 12.12, teilaromatischem Polyamid, insbesondere MXD6, aus Terephthalsäure und/oder Isophthalsäure erhaltenen Polyphthalamiden und Copolyamiden davon besteht.

8. Zusammensetzung nach einem der vorhergehenden Ansprüche, **dadurch gekennzeichnet, dass** das obige erste Copolymer und das obige zweite Copolymer höchstens 50 Gew.-% der Zusammensetzung ausmachen.

9. Zusammensetzung nach einem der vorhergehenden Ansprüche, **dadurch gekennzeichnet, dass** sie außerdem einen Weichmacher, einen Haftvermittler, einen UV-Stabilisator und/oder einen UV-Absorber, ein Antioxidans, ein Flammschutzmittel und/oder ein Farbmittel/einen Aufheller umfasst.

10. Zusammensetzung nach einem der Ansprüche 1 bis 8, **dadurch gekennzeichnet, dass** sie ausschließlich aus dem ersten und dem zweiten der obigen Pfropfcopolymere sowie der obigen dritten Komponente besteht.

11. Mehrschichtstruktur mit mehreren benachbarten Schichten, **dadurch gekennzeichnet, dass** mindestens eine der Schichten aus der Zusammensetzung gemäß einem der vorhergehenden Ansprüche besteht.

## Claims

1. Thermoplastic composition comprising:
a first copolymer grafted by polyamide grafts and consisting of a polyolefin backbone containing a residue of at least one unsaturated monomer (X) and a plurality of polyamide grafts, the polyamide grafts are attached to the polyolefin backbone by the residue of the unsaturated monomer (X) comprising a function capable of reacting by a condensation reaction with a polyamide having at least one amine end group and/or at least one carboxylic acid end group, the residue of the unsaturated monomer (X) is fixed to the backbone by grafting or copolymerization;
**characterized in that** it comprises:
• a second copolymer consisting of an elastomeric copolymer grafted by polyamide grafts and consisting of a polyolefin backbone selected from a maleicized ethylene-propylene copolymer, a maleicized ethylene-butene copolymer, a maleicized ethylene-hexene copolymer, a maleicized ethylene-octene copolymer, a maleicized ethylene-methyl acrylate copolymer, an ethylene-propylene-diene copolymer and a plurality of polyamide grafts;
• a third component consisting of a polyamide, a polyethylene or a polypropylene, or a mixture thereof;
and **in that**, the following weight ratios are satisfied:
- between 10% and 30% by weight of the composition for the polyolefin backbone of the abovementioned first copolymer,
- between 10% and 30% by weight of the composition for the polyolefin backbone of the abovementioned second copolymer,
- between 5% and 35% by weight of the composition of polyamide grafts, fixed to the first and second copolymer,
- between 30% and 60% by weight of the abovementioned third component.

2. Composition according to Claim 1, **characterized in that** the unsaturated monomer (X) is maleic anhydride.

3. Composition according to Claim 2, **characterized in that** the first copolymer is an ethylene/alkyl (meth)acrylate/maleic anhydride terpolymer.

4. Composition according to any one of Claims 1 to 3, **characterized in that** the abovementioned grafted polymer is nanostructured.

5. Composition according to any one of the preceding claims, **characterized in that** the numberaverage molar mass of the abovementioned polyamide grafts of the abovementioned grafted polymer is within the range from 1000 to 10 000 g/mol, preferably between 1000 and 5000 g/mol.

6. Composition according to any one of the preceding claims, **characterized in that** the polyamide grafts consist of monofunctional-NH₂-terminated polyamide PA-6 grafts.

7. Composition according to Claim 6, **characterized in that** the polyamide of the third component consists of a polyamide 6, a polyamide 11, polyamide 12, polyamide 6,6, polyamide 6,9, polyamide 6,10, polyamide 6,12, polyamide 10,12, polyamide 10,10, polyamide 12,12, semiarometic polyamide, expecially MXD-6, polyphthalamides obtained from terephthalic and/or isophthalic acid, and their coppolyamides.

8. Composition according to any one of the preceding claims, **characterized in that** the abovementioned first copolymer and the abovementioned second copolymer represent a maximum of 50% by weight of the composition.

9. Composition according to any one of the preceding claims, **characterized in that** it additionally comprises a plasticizer, an adhesion promoter, a UV stabilizer and/or a UV absorber, an antioxidant, a flame retardant, and/or a dyeing/whitening agent.

10. Composition according to any one of Claims 1 to 8, **characterized in that** it consists solely of the first and the second of the abovementioned grafted copolymers and the abovementioned third component.

11. Multilayer structure comprising a plurality of adjacent layers, **characterized in that** at least one of these layers consists of the composition as defined in any one of the preceding claims.
